# EUROPEAN PATENT APPLICATION

(11) **EP 3 375 713 A1**
(43) Date of publication of application: **19.09.2018**
(21) Application number: 18161956.0
(22) Date of filing: 15.03.2018
(51) Int. Cl.: B64D 41/00

(54) **EMERGENCY POWER GENERATION VIA ELECTRICALLY DRIVEN TAIL CONE BOUNDARY LAYER INGESTION THRUSTER**

(30) Priority: 17.03.2017 US 201715462225
(71) Applicant: Hamilton Sundstrand Corporation, Charlotte, NC 28217-4578 (US)
(72) Inventor: HIMMELMANN, Richard A., Beloit, WI Wisconsin 53511 (US)
(74) Representative: Dehns

(57) **Abstract**

Disclosed is a system for generating power for an aircraft. The system includes a boundary layer ingestion propulser (102) that includes a propulsion fan (104) configured to receive torsional energy from a boundary layer airstream, and a motor generator (106) in operable communication with the propulsion fan and configured to generate power in response to rotation of the propulsion fan.

## Description

### BACKGROUND

Exemplary embodiments pertain to the art of power generation and more particularly to emergency power generation via electrically driven tail cone boundary layer ingestion thruster.

Ram air turbines provide emergency power to conventional aircraft in the event that all of the main engines fail to operate. Commercial aircraft include ram air turbines to develop emergency power in the event that the main engines fail. When the ram air turbine is deployed, a deployment mechanism opens a set of turbine bay doors and extends a turbine assembly into the airstream. The air rushing past the aircraft (due to the aircraft's forward speed) causes the turbine blades to spin. The turbine assembly actuates a hydraulic pump or other power generator that powers essential systems for operating the aircraft during an engine failure. Ram air turbines, despite their sophisticated mechanisms and weight, prove to be essential equipment in many modem aircraft.

Emerging airframe technologies now incorporate elements of hybrid electric propulsion such as, for example, boundary layer ingestion. Hybrid electric aircraft propulsion systems offer the airframe the ability to re-energize the aircraft boundary layer, increasing the propulsion efficiency of the aircraft. Some boundary layer ingestion systems incorporate an electric machine in the tail cone propulser for boundary layer ingestion to increase propulsion efficiency, and thrust boosting during takeoff and climb of the hybrid aircraft.

### BRIEF DESCRIPTION

Disclosed is a system for generating power for an aircraft. The system includes a boundary layer ingestion propulser that includes a propulsion fan configured to receive torsional energy from a boundary layer airstream, and a motor generator in operable communication with the propulsion fan and configured to generate power in response to rotation of the propulsion fan.

A method for generating power for an aircraft is disclosed. The method includes receiving torsional energy from a boundary layer airstream with a propulsion fan of a boundary layer ingestion propulser, and generating power with a motor generator in operable communication with the propulsion fan in response to a rotation of a propulsion fan.

Also described is an aircraft propulsion system. The system includes a boundary layer ingestion propulser that includes a propulsion fan. A motor generator is in operable communication with the propulsion fan and configured to generate power in response to a rotation of the propulsion fan. The boundary layer ingestion propulser is electrically driven and configured to provide aircraft ground maneuver propulsion. The boundary layer ingestion propulser is also configured be driven in reverse during a landing operation.

### BRIEF DESCRIPTION OF THE DRAWINGS

The following descriptions should not be considered limiting in any way. With reference to the accompanying drawings, like elements are numbered alike:
FIG. 1 is a diagram of a system for generating power for an aircraft; and
FIG. 2 is a flow diagram of a method for generating power for an aircraft.

### DETAILED DESCRIPTION

A detailed description of one or more embodiments of the disclosed apparatus and method are presented herein by way of exemplification and not limitation with reference to the Figures.

Ram air turbines are utilized to provide emergency power to conventional aircraft in the event that all of the main engines fail to operate. When the ram air turbine is deployed, the air rushing past the aircraft (due to the aircraft's forward speed) causes the turbine blades to spin. The spinning turbine is utilized to drive electric generators and/or hydraulic pumps. All commercial aircraft are required to have a system to develop emergency power in the event that the main engines fail.

This invention disclosure describes a system for an electrically driven tail cone boundary layer ingestion thruster for emergency power generation in an aircraft having tail cone boundary layer thrusters. Some embodiments may replace an aircraft ram air turbine and its associated hardware in a commercial aircraft configured with a boundary layer ingestion tail cone thruster. By way of a general overview according to one or more embodiments, in the event that the main engines fail, air flowing past the moving aircraft will force the tail cone propulsion fan in the tail cone thruster to rotate. This rotation will cause the tail cone thruster electric motor generator to rotate, which will generate alternating electric power. This power can be rectified and sent to the aircraft electrical bus to provide emergency power, much like a conventional ram air turbine. Either a passive or an active rectifier could be employed.

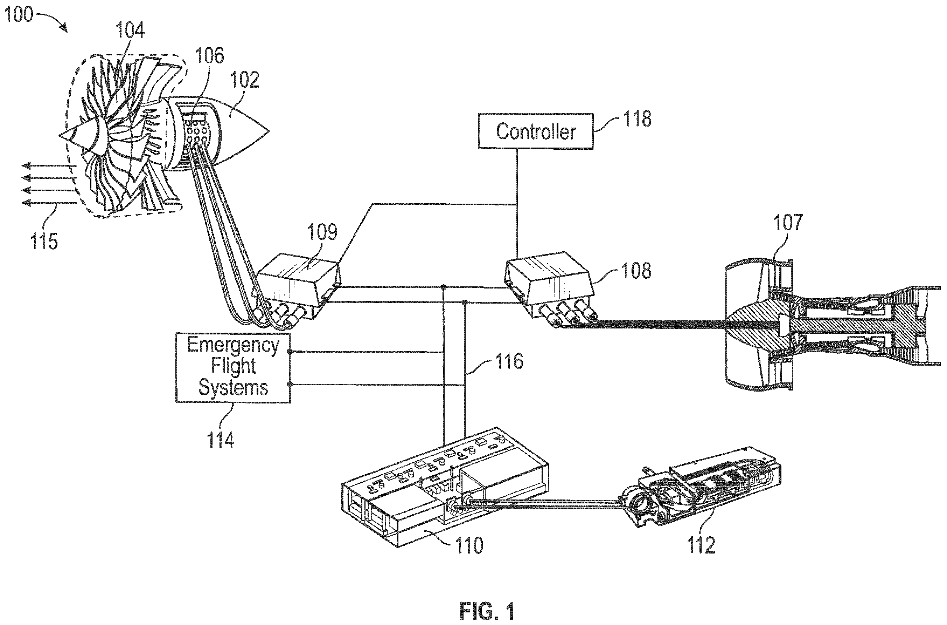

FIG. 1 depicts system 100 for generating power for an aircraft, according to one embodiment. Referring now to FIG. 1, system 100 includes a boundary layer ingestion propulser 102 that includes a tail cone propulsion fan 104 (hereafter "propulsion fan 104"). Propulsion fan 104 is operatively connected to a motor generator 106. Motor generator 106 is rigidly fixed to propulsion fan 104 such that propulsion fan 104 can spin the motor generator 106 to generate electrical power, or the motor generator 106 can spin propulsion fan 104 to generate thrust. In one aspect, motor generator 106 is configured to synchronously rotate with propulsion fan 104 and convert the torsional energy from the rotation of propulsion fan 104 to electric power.

System 100 further includes a bi-directional rectifier-inverter 109 operatively connected to the motor generator 106 and configured to receive the electric power from motor generator 106 via power bus 116. Bi-directional rectifier-inverter 109 is operatively connected to one or more flight control devices. The one or more flight control devices may be, for example, emergency flight systems 114. Controller 118 is operatively connected to bi-directional rectifier-inverters 108 and 109.

In one embodiment, system 100 further includes a bi-directional DC to DC converter 110. Bi-directional DC to DC converter 110 may be operatively connected to an energy storage device 112.

According to one embodiment, controller 118 includes one or more processor and a computer-readable memory (not shown). A processor can be configured to determine whether the gas turbine engine 107 is in a failure condition, so as to direct the electrically driven tail cone propulser to begin generating electrical energy instead of consuming it. Responsive to determining that the gas turbine engine 107 is in a failure condition, controller 118 may cause bi-directional rectifier-inverter 109 to rectify the electric power for transmission to the at least one flight control device in emergency flight systems 114. For example, controller 118 may determine whether one or more gas turbine engines 107 are functional (producing propulsion power to the aircraft). If gas turbine engine 107 is in a failure condition (not running), propulsion fan 104 will be spinning freely as airstream 115 passes over the fan. Propulsion fan 104 will spin motor generator 106 causing it to generate unrectified electric power. Accordingly, responsive to determining the engine failure, controller 118 may cause bi-directional rectifier-inverter 109 to provide the rectified power to the at least one flight control device in emergency flight systems 114.

In some aspects controller 118 may be a flight computer. In other aspects, controller 118 may be a separate controller operatively connected to the flight computer. Accordingly, controller 118 may determine the operative state of gas turbine engine 107 independently to determine an engine failure. In other aspects, gas turbine engine 107 may receive information from the flight controller indicative of an engine failure.

Emergency flight systems 114 can include one or more flight control devices needed to control the aircraft in the event of a failure condition of the main propulsion and power generation system (e.g., one or more gas turbine engines 107). In some aspects, when the gas turbine engines 107 on the aircraft are in a failure condition, power to the emergency flight systems is also discontinued. Accordingly, hydraulic or electric power needed for avionics control, communications devices such as radios and transceivers, and other systems may be disabled. According to one embodiment, if gas turbine engine 107 is in a failure condition system 100 may provide power to emergency flight systems 114 in the event of a failure condition of gas turbine engine 107, propulsion fan 104 can spin the motor generator 106 to generate power and generate electrical energy instead of consuming it.

In some aspects, controller 118 may cause bi-directional rectifier-inverter 109 to transmit the rectified electric power to DC to DC converter 110. DC to DC converter 110 may receive rectified power from the bi-directional rectifier-inverter 108, and transmit rectified electric power from the bi-directional DC to DC converter 110 to an energy storage device 112 operatively connected to the bi-directional DC to DC converter. In some aspects, energy storage device 112 may be a battery, a battery bank, or other electric power storage mechanism. In one aspect, the energy storage device or the aircraft APU may be used to power the electrically driven tail cone propulser in the forward or backward direction (with the main engines turned off) to provide aircraft ground maneuver propulsion (e.g., electric taxi operations). In another aspect, the tail cone thruster may operate in reverse to slow the aircraft during landing operations.

In other aspects, controller 118 may cause energy storage device 112 to transmit power to bi-directional DC to DC converter 110 and provide the rectified power to the at least one flight control device in emergency flight systems 114.

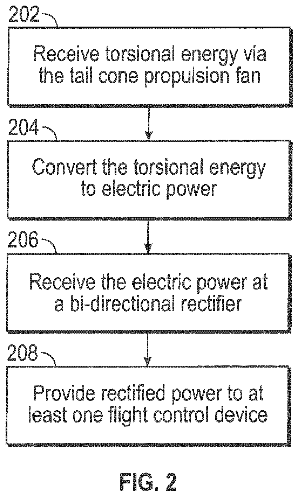

FIG. 2 is a flow diagram of a method for generating power for an aircraft, according to one embodiment. According to one embodiment, as shown in block 202, controller 118 may cause motor generator 106 to receive torsional energy from a boundary layer airstream 115 via a propulsion fan 104 in a boundary layer ingestion propulser 102.

As shown in block 204, controller 118 may cause motor generator 106 to convert the torsional energy to electric power. More particularly, a rotor of motor generator 106 is fixed to the tail cone propulsion fan and configured to synchronously rotate with the propulsion fan 104.

As shown in block 206, controller 118 may cause bi-directional rectifier-inverter 109 to receive the electric power from motor generator 106 and rectify the power.

As shown in block 208, controller 118 may cause bi-directional rectifier-inverter 109 to provide power to the at least one flight control device in emergency flight systems 114.

Embodiments of the present invention may eliminate the need to incorporate a conventional ram air turbine on commercial aircraft configured with a boundary layer ingestion tail cone thruster. This will reduce the cost, complexity, and mass of the aircraft.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor in controller 118, or other operatively connected programmable data processing apparatus (not shown) to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the blocks may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present invention as defined by the claims. In addition, many modifications may be made to adapt a particular situation or material to the teachings of the present disclosure without departing from the scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A system for generating power for an aircraft comprising:
a boundary layer ingestion propulser (102) comprising a propulsion fan (104) configured to receive torsional energy from a boundary layer airstream (115); and
a motor generator (106) in operable communication with the propulsion fan and configured to generate power in response to rotation of the propulsion fan.

2. The system of claim 1, further comprising:
a bi-directional rectifier-inverter (108) operatively connected with the motor generator and configured to receive the power from the motor generator; and
at least one flight control device operatively connected to the bi-directional rectifier-inverter, wherein the bi-directional rectifier-inverter is configured to provide power to the at least one flight control device.

3. The system of claim 1 wherein the power generated is one or more of electric power and hydraulic power.

4. The system of claim 2, further comprising a controller (118) operatively connected to the bi-directional rectifier-inverter, the controller configured to:
determine, via a processor, whether a gas turbine engine is in a failure condition;
responsive to determining that the gas turbine engine is in a failure condition, rectify electric power for transmission to the at least one flight control device; and
provide the rectified power to the at least one flight control device.

5. The system of claim 4 further comprising a bi-directional DC to DC converter (110) operatively connected to the bi-directional rectifier-inverter.

6. The system of claim 2, wherein the at least one flight control device comprises one or more communications devices.

7. A method for generating power for an aircraft comprising:
receiving torsional energy from a boundary layer airstream with a propulsion fan of a boundary layer ingestion propulser; and
generating power with a motor generator in operable communication with the propulsion fan in response to a rotation of the propulsion fan.

8. The method of claim 7, comprising:
determining, via a processor, whether a gas turbine engine is in a failure condition;
responsive to determining that the gas turbine engine is in a failure condition, rectifying electric power for transmission to at least one flight control device; and
providing the rectified electric power to the at least one flight control device.

9. The method of claim 8, comprising:
providing the rectified electric power to the at least one flight control device, wherein the at least one flight control device comprises one or more communications devices.

10. The method of claim 8, wherein the power generated is one or more of electric power and hydraulic power.

11. The method of claim 9 comprising:
receiving rectified power from a bi-directional rectifier-inverter via a bi-directional DC to DC converter.

12. The method of claim 11, further comprising:
receiving the rectified power from the bi-directional rectifier-inverter; and
transmitting, via the processor, rectified electric power from the bi-directional DC to DC converter to an energy storage device.

13. The method of claim 11, wherein the processor is further configured for:
transmitting the rectified power from the energy storage device to the motor generator via the bi-directional DC to DC converter; and
generating thrust via the motor generator for one or more of a ground operation and a reverse thrust operation.

14. The method of claim 8, wherein the at least one flight control device comprises one or more communications devices.
